# EUROPEAN PATENT SPECIFICATION

(11) **EP 4 469 677 B1**
(45) Date of publication and mention of the grant of the patent: **04.02.2026**
(21) Application number: 22850680.4
(22) Date of filing: 22.12.2022
(51) Int. Cl.: F03B 13/14, F03B 11/00

(54) **DEVICE FOR GENERATING ELECTRICAL ENERGY FROM WAVE MOTION**
VORRICHTUNG ZUR ERZEUGUNG ELEKTRISCHER ENERGIE AUS WELLENBEWEGUNG
DISPOSITIF DE PRODUCTION D'ÉNERGIE ÉLECTRIQUE À PARTIR D'UN MOUVEMENT ONDULATOIRE

(30) Priority: 27.01.2022 IT 202200001349
(43) Date of publication of application: 04.12.2024
(73) Proprietor: Fimeco S.r.l., 98042 Pace del Mela (ME) (IT)
(72) Inventor: COMPOSTO, Ylenia, 98042 PACE DEL MELA (ME) (IT)
(74) Representative: Tiburzi, Andrea
(86) International application number: PCT/IT2022/050342
(87) International publication number: WO 2023/144846

(56) References cited:
- EP-A1- 2 949 920
- FR-A1- 2 456 860
- GB-A- 2 330 625
- JP-A- S6 090 990
- JP-A- S60 215 907

## Description

The present invention relates to a device for generating electrical energy from wave motion.

### Field of the invention

More in detail, the invention relates to a device of the type described above, designed and manufactured in particular to produce electric energy following displacements of water, exploiting, in particular, the wave motion of the sea.

In the following, the description will be directed to the production of electricity starting from sea waves and currents, but it is clear that the same should not be considered limited to this specific use.

### Prior art

As is known, in recent years there has been a diffusion of systems capable of producing electrical energy starting from alternative and renewable energy sources.

In particular, the need is felt to make the most of and continuously exploit the kinetic energy contained in the waves of the sea, since the energy of the wave motion is an important source of renewable energy.

Systems are known for the production of electricity capable of exploiting the wave motion of the sea. In particular, the kinetic energy produced by the wave motion is converted, by means of these systems, into electrical energy to be introduced, for example, into the electrical distribution network.

Currently, the oscillating water column plant (in English *"Oscillating Water Column",* OWC) represents the cheapest and most widespread system for converting the kinetic energy produced by wave motion into electricity.

More specifically, the oscillating water column system exploits the vertical oscillatory movement of the water column inside a chamber, creating the compression and subsequent expansion of the air contained above the water level.

This air flow is then channeled so as to operate an air turbine, always maintaining the same direction of rotation to start the electric alternator for the production of electricity.

To date, the two most commonly used types of air turbines are unidirectional turbines and bidirectional turbines.

The unidirectional turbine has an air flow rectification system equipped with non-return valves, so as to allow unidirectional operation.

On the other hand, however, the bidirectional turbine does not include any non-return valve since the turbine is capable of operating with bidirectional air flows.

In particular, between the two types of turbines mentioned above, unidirectional turbines are typically used due to their high efficiency compared to bidirectional turbines.

However, the airflow rectification system is complex, both due to the large size and high response times of the valves.

Therefore, both types of conventional turbines are limited to small devices.

Instead, for large plants, Wells turbines are generally used.

More specifically, Wells turbines are used in oscillating water column systems as they are self-rectifying, i.e. capable of always rotating in the same direction regardless of the direction of the air flow passing through them.

This represents the necessary condition for the activation of the electric alternator for the production of electricity.

However, a drawback of these known solutions is that they are characterized by low efficiency, due in particular to the high connection angle of the rotor blade with respect to the incoming flow and the lack of a fixed operating point.

Another drawback of these known solutions is that they are not capable of self-starting. In fact, it is necessary to couple Wells turbines to a launch engine, thus increasing both installation costs and maintenance costs.

A further drawback of these known solutions is that they can only be used in plants with an oscillating water column for oceanic applications, for example on the Atlantic coast, or in "off-shore" applications. In particular, Wells turbines are used only in the presence of waves having a height greater than approximately 3-4 meters.

Finally, another drawback of these known solutions is that they involve high construction and maintenance costs. In fact, the cost of the energy obtained with these systems is high.

By way of example, it is estimated that the levelized cost of energy (in English *"Levilized Cost of Energy",* LCOE) for these plants is approximately 90÷101 €/MWh for plants installed on the coast, and approximately 180÷490 € /MWh for plants located off-shore.

Therefore, these values are higher than the values obtained with other energy systems. For example, the levelized cost of energy is around €50/MWh for a geothermal plant, around €68/MWh for a photovoltaic plant, and around €60/MWh and around €102/MWh respectively for an installed wind farm on land or at sea.

The prior art also includes British patent application GB2330625A, relating to a turbine installed on a platform having hydraulic members to allow it to be raised in the event of a storm.

### Scope of the invention

In the light of the above, it is therefore the scope of the present invention to overcome the disadvantages mentioned above, providing a device for generating electricity from wave motion.

Another scope of the invention is to provide a device for generating electricity from wave motion, which allows obtaining a synergistic effect between the following mechanisms and/or drives: drive mechanism of one or more air turbines, short response to bi-directional airflow from a chamber of an oscillating water column system, use of one or more uni-directional air turbines to achieve high efficiency, and a high-height wave protection system.

A further scope of the invention is to provide a device for generating electricity from wave motion which can be used in sites where the height of the sea waves is equal to or less than approximately 3 meters, such as, for example, the basin of the Mediterranean sea.

Another scope of the invention is to provide a device for generating electricity from wave motion which is highly reliable, relatively simple to manufacture, and at competitive costs when compared to the prior art.

### Object of the invention

It is, therefore, specific object of the present invention a device for generating electrical energy from wave motion, wherein said device can be coupled, in use, to a chamber of an oscillating water column plant, said chamber being open below to allow the entry or exit of water, wherein said device comprises a first duct, connected to said chamber, a second duct, connected to said first duct, a third duct, connected to said first duct and to said second duct, a first turbine, installed in said second duct, a second turbine, installed in said third duct, a first diverting group, arranged in said third duct, for diverting a first air flow coming from said chamber towards the external environment, by means of said second duct, activating said first turbine, and for diverting a second air flow coming from the external environment, by means of said third duct, activating said second turbine, a transmitting shaft, arranged between said second duct and said third duct, wherein said first turbine and said second turbine are keyed on said transmitting shaft, and a rotating electrical machine, keyed on said transmitting shaft, for converting the mechanical energy supplied by said first turbine and said second turbine into electrical energy in the form of alternating current.

Advantageously according to the invention, said device may comprise a central control unit comprising a logic control unit, connected to said first diverting group, wherein said first diverting group comprises a first actuator and a first diverting member connected to said first actuator, a pressure switch, a piezometric tube connected to said pressure switch, wherein said pressure switch, connected to said logic control unit and to said chamber by means said piezometric tube, is capable of detecting at least one pressure value associated to an amount of water contained in said piezometric tube, such that: if said pressure value detected by said pressure switch is positive, said logic control unit determines the presence of an increasing wave and activates said actuator in such a way that said first diverting member moves from a second operating position, in which it allows to said second air flow to flow in said first duct, to a first operating position, in which it allows to said first flow air to allow in said second duct; or if said pressure value detected by said pressure witch negative, said logic control unit determines the presence of a decreasing wave and activates said actuator in such a way that said first diverting member moves from said first operating position to said second operating position.

Conveniently according to the invention, said central control unit may comprise a proximity sensor, connected to said logic control unit and to said chamber by means of said piezometric tube, wherein said proximity sensor is capable of detecting the presence of water contained in said piezometric tube within a predetermined distance from said proximity sensor, wherein said third duct may have a further opening for allowing the passage of a third air flow and/or water from said chamber towards the external environment, and wherein said device may comprise a second diverting group, arranged in said third duct and connected to said logic control unit, wherein said second diverting group comprises a second actuator, and a second diverting member, connected to said second actuator.

Still according to the invention, when said proximity sensor detects the presence of water within said predetermined distance or when said pressure value provided by said pressure switch is greater than a further pressure value, said logic control unit may be configured for activating at the same time said actuators of said diverting groups in such a way said diverting member are both in said second operating position, so that said flow of water and/or air does not flow towards said turbines.

Always according to the invention, said first turbine may a unidirectional air turbine and comprises a plurality of first rotating members having a first orientation, said second turbine may be a unidirectional air turbine and comprises a plurality of second rotating members having a second orientation, wherein said second orientation of said second rotating members may be opposite to said first orientation of said first rotating members.

Advantageously according to the invention, said first rotating members and said second rotating members may be made of brass to resist the corrosive action of wave motion, and said first, second and third duct may be made of AISI 316 stainless steel.

Conveniently according to the invention, said electrical rotating machine may be connected to a converter, connected in its turn to an electrical power supply network, wherein said converter is capable of converting in the form of variable frequency alternating current supplied by said rotating electrical machine into constant frequency electrical energy in order to be placed into said electrical power supply network.

Still according to the invention, said first duct, and said second duct and said third duct may be connected to each other in such a way as to make a "Y" shaped structure, wherein said second duct and said third duct are parallel to each other.

Still according to the invention, said first duct may have an opening on one end for allowing air and/or water to flow from said chamber towards said second duct or said second duct and vice versa and said second duct may have an opening on one end for allowing the exit of said first air flow from said chamber towards the external environment.

### Brief description of the figures

The present invention will be now described, for illustrative but not limitative purposes, according to its preferred embodiments, with particular reference to the figures of the enclosed drawings, wherein:
figure 1 shows a perspective view partially in section of an embodiment of a device for generating electricity from wave motion, according to the present invention;
figure 2 shows, in a schematic view, an operative connection between the device for generating electric energy from the wave motion of figure 1 and a chamber of an oscillating water column plant;
figure 3 shows, in schematic view and in detail, the operative connection between the device for generating electricity from wave motion and the chamber of the oscillating water column plant of figure 2;
figure 4 shows, in schematic view and in detail, a step of the expulsion of air from the chamber of the oscillating water column plant towards the device for generating electricity from wave motion of figure 1, when the sea wave is growing;
figure 5 shows, in schematic view and in detail, a step of introducing air from the device for generating electricity from wave motion of figure 1 towards the chamber of the oscillating water column plant, when the sea wave is decreasing; and
figure 6 shows, in a schematic view, a protection step of the device for generating electric energy from wave motion of figure 1 from high waves and/or high-pressure values.

In the various figures, similar parts will be indicated with the same reference numbers.

### Detailed description

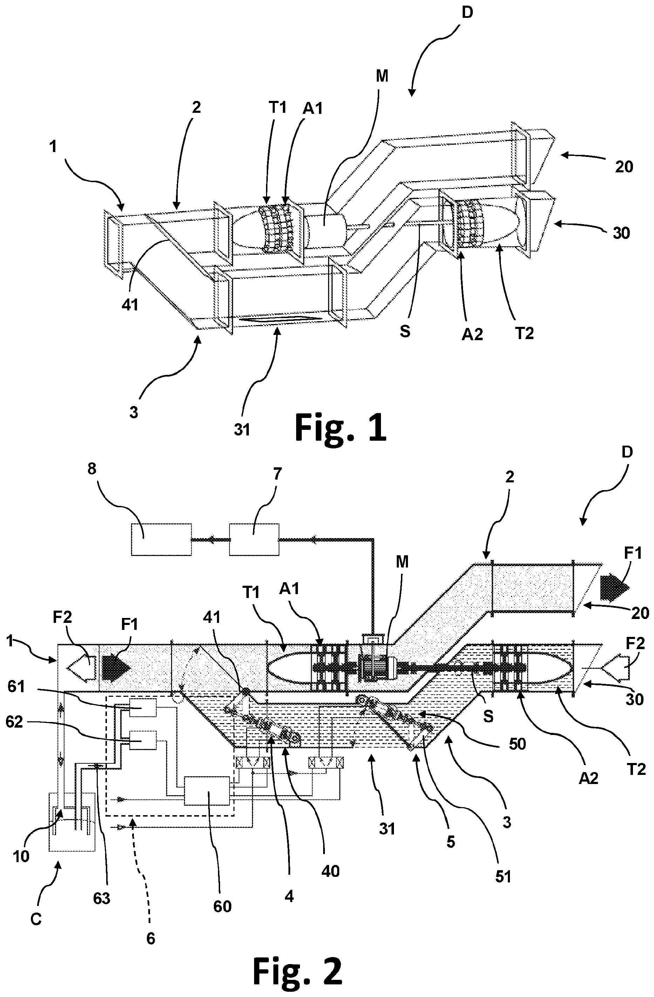

With reference to figures 1-6, the device for generating electricity from wave motion, globally indicated with the reference letter D, comprises a first duct or main duct 1, which can be connected, in use, to a chamber C of a plant with oscillating water column, a second duct or upper duct 2, connected to said main duct 1, a third duct or lower duct 3, connected to said main duct 1 and to said second duct 2, a first turbine T1 positioned in said second duct 2 and a second turbine T2 positioned in said third duct 3.

In the embodiment described, the device D for generating electric energy from wave motion has a substantially "Y" shape.

In fact, as can be seen from figures 1-6, said main duct 1, said second duct 2, and said third duct 3 are connected to each other so as to form a "Y" shaped structure.

In particular, said second duct 2 and said third duct 3 are substantially parallel to each other. Furthermore, as will be better described hereinafter, said second duct 2 and said third duct 3 can be alternatively connected, in use, to said first duct 1.

Furthermore, in the embodiment described, said chamber C is a hollow structure of an oscillating water column system, which is installed, for example, along the coast. Said chamber C can comprise air and/or water.

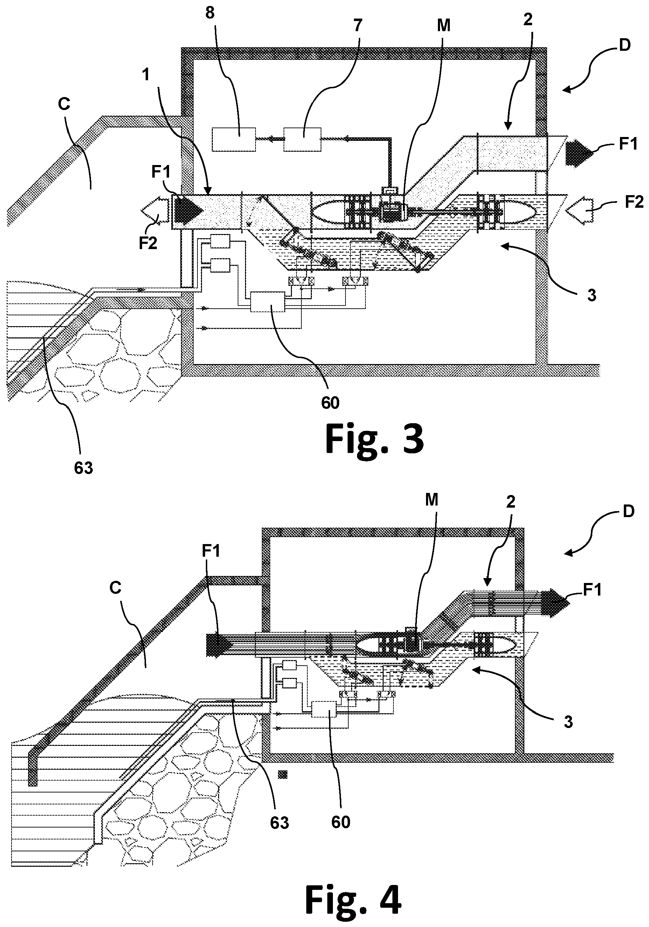

In particular, with reference to figures 3-6, the chamber C is open at the bottom to allow the entry or the exit of seawater into/from said chamber C due to the action of the waves.

Each duct 1, 2, 3 is open at least on one respective end.

In particular, the main duct 1 has an opening 10 at one end to allow the passage of air and/or water from the chamber C towards the second duct 2 and/or the third duct 3, and vice versa.

The second duct 2 has an opening 20 at one end to allow the exit of a first air flow F1 coming from the chamber C towards the external environment (with an increasing or rising wave).

The third duct 3, on the other hand, has an opening 30 to allow the entry of a second air flow F2 from the external environment towards the chamber C (of a decreasing or descending wave). Furthermore, the third duct 30 has a further opening 31 to allow the outflow of a third air flow and/or water F3 from the chamber C towards the external environment (with high waves).

In the present embodiment, each duct 1, 2, and 3 is made of AISI 316 stainless steel. However, in other embodiments, said ducts 1, 2 and 3 can be made of materials other than those described.

As mentioned, the first turbine T1 is installed in said second duct 2, and the second turbine T2 is installed in said third duct 3.

In particular, the first turbine T1 and the second turbine T2 are keyed to a single transmission shaft or axis S. The transmission shaft S is arranged between said second duct 2 and said third duct 3.

The first turbine T1 is a unidirectional air turbine and comprises a plurality of first rotating members or first vanes A1 having a first orientation.

Similarly, the second turbine T2 is also a one-way air turbine and comprises a plurality of second rotating members or second vanes A2 having a second orientation, different from the first orientation of the first rotating members A1 of the first turbine T1.

In the embodiment described, the orientation of the first orientation members A1 is opposite to the orientation of the second orientation members A2.

However, in other embodiments, the orientation of the orientation members A1, A2 can be different from what is described, without thereby departing from the scope of protection of the present invention.

The structural dimensioning of each turbine T1, T2 (in particular, the diameters of the rotor (not shown in the figures), of the stator (not shown in the figures) as well as the inclination of the orientation members A1, A2) depends on the dimensions of the chamber C, to which the wave electric power generation device D, according to the present invention, is connected when in use.

In particular, the dimensions of the chamber C determine the quantity of air which flows in the ducts 1, 2, and 3 and which reaches the same turbines T1, T2. More in detail, as the dimensions of the chamber C increase, the air flow inside it increases and, therefore, also the driving torque at the shaft of the turbines T1, T2 increases. The chamber C is typically sized based on the type of waves characterizing the site where it is installed.

In the present embodiment, the stators, the rotors as well as the rotating members A1, A2 are made of brass, so that they can resist the corrosive action of the sea.

However, in other embodiments, the stators, the rotors and the rotating members A1, A2 of said turbines T1, T2 can be made using a different type of material.

In addition, said device D for generating electric energy from wave motion comprises a rotating electric machine M for converting the mechanical energy supplied by each turbine T1, T2 into electric energy in the form of alternate current.

In particular, as will be better explained hereinafter, the driving torque at the axis of the two turbines T1, T2 determines the power of the rotating electric machine M.

In the embodiment described, said rotating electric machine M is an electric alternator.

However, in other embodiments, the number and type of said rotating electric machine M can be different from what is described.

In particular, said rotating electric machine M is keyed to said transmission shaft S.

Furthermore, said rotary electric machine M is connected to said first turbine T1 and to said second turbine T2.

Advantageously, by connecting the two turbines T1, T2 to the same rotating electric machine M, a greater efficiency of this rotating electric machine M is obtained. In fact, as will be explained in detail below, having at the shaft a driving torque, which pushes regardless then the wave (both in the presence of a decreasing wave and a rising wave), the rotating electric machine M is able to supply energy in a constant way.

Furthermore, it is known that, in order to operate, the electric alternator M must always rotate in the same rotation direction. For this reason, as anticipated, the first orientation members A1 of said first turbine T1 are oriented in the opposite direction with respect to the second orientation members A2 of said second turbine T2.

Furthermore, the rotating electric machine M is connected to a converter 7, connected in its turn to an electric power supply network 8.

The converter 7 is capable of converting the electric energy into variable frequency alternating current supplied by said electric machine M in alternating current at a constant frequency (50Hz) in order to be fed into the electrical power supply network 8.

In this regard, it should be noted that the electricity supplied by the electric alternator M has a variable frequency as it is linked to the number of revolutions of the transmission shaft S, which in turn is directly connected to the turbines T1 and T2, which rotate according to the flow rate of the air coming from the chamber C.

With particular reference to figures 2-6, in the embodiment that is described, the device D for generating electricity from wave motion comprises a first diverting group 4, arranged between said second duct 2 and said third duct to 3, a second diverting group 5, arranged in said third duct 3, and a central control unit 6 operatively connected to said first diverting group 4, to said second diverting group 5, and to said chamber C.

The first diverting group 4 allows diverting said first air flow F1 coming from said chamber C, in the rising wave phase, towards the external environment by means of said second duct 2.

In this way, said first air flow F1 crosses said first turbine T1, by moving said first rotating members A1, and comes out from said opening 20 of said second duct 2.

Furthermore, the first diverting group 4 allows to divert said second air flow F2 coming from the external environment towards said chamber C, in the decreasing wave phase, by means of said third duct 3.

In this way, said second air flow F2 passes through said second turbine T2, moving said second rotating members A2, and comes out of said opening 10 of said first duct 1.

More in detail, said first diverting group 4 comprises a first actuator 40, and a first diverting member or first flow deviator 41, connected to said first actuator 40.

As can be seen from figures 2-6, said first diverting member is arranged in an intersection or root portion between the second duct 2 and the third duct 3.

In the embodiment described, said first actuator 40 is a pneumatic piston. However, in other embodiments, the number and type of said first actuator 40 can be different from what is described.

The first diverting member 41 is capable of passing between a first operating position, in which it allows said first air flow F1 (air expulsion phase) to flow into said second duct 2, and a second operating position, in which allows said second air flow F2 (air intake phase) to flow into said first duct 1.

In particular, when said first diverting member 41 is in said first operating position, said first diverting member 41 does not allow said first air flow F1 to flow into said third duct 3. In fact, said first diverting member 41 allows a direct connection to be made between said first duct 1 and said second duct 2, excluding said third duct 3.

When, on the other hand, said first diverting member 41 is in said second operating position, said first diverting member 41 does not allow said second air flow F2 to flow into said second duct 2.

In fact, said first diverting member 41 allows a direct connection to be made between said first duct 1 and said third duct 3, excluding said second duct 2.

Therefore, as will be better described hereinafter, in the phases of a decreasing or increasing wave, the two air flows F1, F2 are channeled in the respective two ducts 2, 3 and remain separate from each other. Furthermore, the two air flows F1, F2, which flow respectively in the ducts 2, 3, moving the orientation members A1, A2 of the two turbines T1, T2, have an opposite direction to each other. In this way, as will be better explained hereinafter, the same direction of rotation is obtained at the axis S.

As anticipated, said first diverting group 4 is operatively connected to said central control unit 6.

The central control unit 6 comprises a logic control unit 60, connected to said first diverting group 4, a pressure switch 61, connected to said logic control unit 60, and a proximity sensor 62, also connected to said logic control unit 60.

The pressure switch 61 is connected to said chamber C by means of a piezometric tube 63. Said pressure switch 61 is capable of detecting a pressure value associated with a quantity of water contained in said piezometric tube 63. This pressure value can be a positive pressure value, in the presence of a rising wave, or a negative pressure value, in the presence of a decreasing wave.

In the present embodiment, said pressure switch 61 is an electronic pressure switch, having adjustable setting. However, in other embodiments, the type of said pressure switch 61 can be different from what is described.

In particular, when said pressure switch 61 detects a pressure value, said pressure switch 61 supplies this pressure value to said control logic unit 60.

Said control logic unit 60 is configured to determine the presence of an increasing or decreasing wave on the basis of the pressure value detected by the pressure switch 61.

More in detail, with reference to figure 4, if the pressure value supplied by the pressure switch 61 is positive, the logic control unit 60 determines the presence of a increasing wave and activates the actuator 40 so that said first diverting member 41 passes from said second operating position to said first operating position.

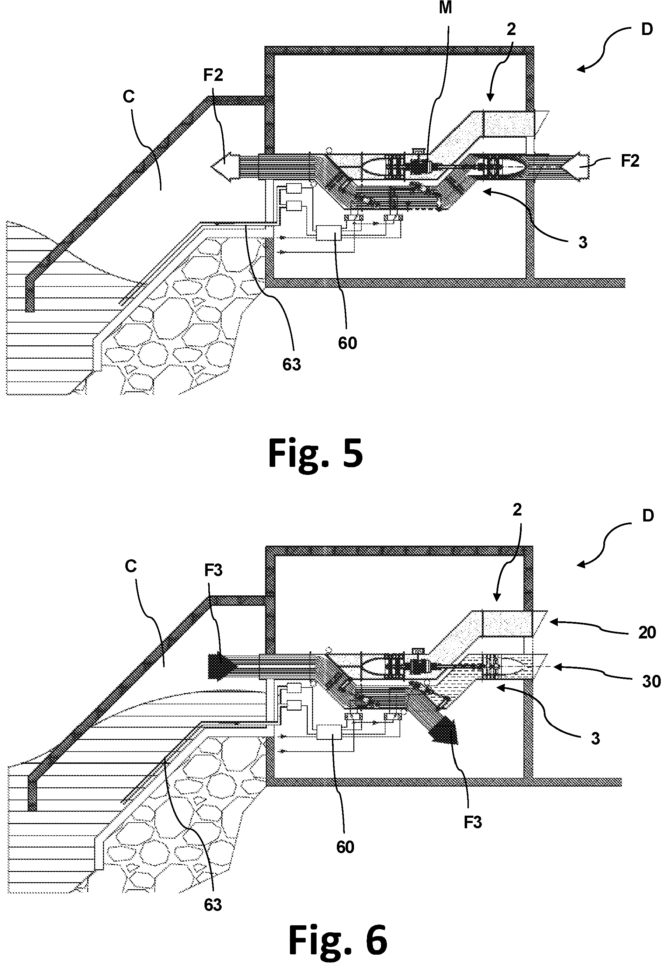

On the other hand, with reference to figure 5, if the pressure value supplied by said pressure switch 61 is negative, said logic control unit 60 determines the presence of a decreasing wave and activates said actuator 40 in such a way that said first diverting member 41 passes from said first operating position to said second operating position.

Therefore, it is evident how the system composed of the first diverting group 4 and of the control unit 60 resets the response times to channel the air flow F1 or F2, into the respective ducts 2 or 3, in synchronism with the trend of the rising or decreasing wave.

Said second diverting group 5 allows to divert the flow of water and/or air F3 coming from said chamber C towards the outside.

In this way, as can be seen from figure 6, said water and/or air flow F3 flows in said third duct 3 and comes out of said further opening 31 of said third duct 3.

In more detail, said second diverting group 5 comprises a second actuator 50, and a second diverting member or second flow deviator 51, connected to said second actuator 50.

In the embodiment described, said second actuator 50 is a pneumatic piston. However, in other embodiments, the number and type of said second actuator 50 can be different from what is described.

Said second diverting member 51 is capable of passing between a first operating position (at rest), in which it allows said water and/or air flow F3 to flow into said third duct 3, and a second operating position, in which it allows said water and/or air flow F3 to flow outwards.

As anticipated, the central control unit 6 comprises said proximity sensor 62.

Said proximity sensor 62, connected to said chamber C by means of said piezometric tube 63, is capable of detecting the presence of water contained in said piezometric tube 63 within a predetermined distance from said proximity sensor 62.

If said proximity sensor 62 detects the presence of water within said predetermined distance, said logic control unit 61 determines the presence of a high wave and simultaneously activates said actuators 40, 50 of said diverting groups 4, 5 in such a way that said diverting members 41, 51 are both in said second operating position.

As can be seen in figure 6, in this way the water and/or air flow F3 does not flow towards the turbines T1, T2, but is diverted by both the diverting members 41, 51 of said diverting groups 4, 5 towards said further opening 31.

Furthermore, the same protection of the turbines T1, T2 is also activated when there is a considerable air pressure at the outlet of the chamber C, detected by the pressure switch 61, which can cause an overspeed condition) damaging the turbines T1, T2 and, consequently, also the electric alternator M.

In fact, if the pressure value supplied by said pressure switch 61 is greater than a further predetermined pressure value, said logic control unit 60 determines the presence of a high wave and simultaneously actuates said actuators 40, 50 of said diverting groups 4, 5, so that said diverting members 41, 51 are both in said second operating position.

The operation of the device D for generating electricity from wave motion described above is as follows.

Initially, said device D for generating electric energy from wave motion is connected to the chamber C of an oscillating water column plant partially immersed in water and bound to the sea bed.

Said first diverting member 41 of said first diverting group 4 is in said second operating position and said second diverting member 51 of said second diverting group 5 is in said first operative (rest) position.

Subsequently, with reference to figures 4 and 5, in the presence of sea wave oscillations, the water enters the chamber C and, therefore, into the piezometric tube 63.

Said pressure switch 61 detects a pressure value (positive or negative) and supplies this pressure value to said logic control unit 60.

As can be seen from figure 4, if the pressure value supplied by said pressure switch 61 is positive, said logic control unit 60 determines the presence of a increasing wave and activates said actuator 40 so that said first diverting member 41 passes from said second operating position to said first operating position.

Therefore, the air is compressed towards the upper portion of said chamber C and said first air flow F1 flows in said second duct 2, moving said first orientation members A1 of said first turbine T1, and subsequently leaving from said second opening 20 of said second duct 2.

Said second diverting member 51, on the other hand, remains in said first operating (rest) position.

On the other hand, as can be seen from figure 5, if the pressure value supplied by said pressure switch 61 is negative, said logic control unit 60 determines the presence of a decreasing wave and activates said actuator 40 in such a way that said first diverting member 41 moves from said first operative position to said second operative position.

Therefore, the air expands towards the lower portion of said chamber C and said second air flow F2, sucked in from the outside through the opening 30, flows into said third duct 3, moving said second orientation members A2 of said second turbine T2, and therefore passing through the first deflection unit 4, entering the chamber C through the first duct 1.

Also in this case, said second deflection member 51 remains in said first operating (rest) position.

In both cases, the rotating electric machine M converts the mechanical energy supplied by each turbine T1, T2 into electric energy in the form of alternate current.

Said converter 7 converts the electric energy into alternating current at variable frequency, supplied by said rotating electric machine M into alternating current at constant frequency (50Hz) in order to be injected into the electric power supply network 8.

With reference to figure 6, if said proximity sensor 62 detects the presence of water within said predetermined distance, said control logic unit 60 determines the presence of a high wave, and simultaneously actuates said actuators 40, 50 of said diverting groups 4, 5, so that said diverting members 41, 51 are both in said second operating position.

Furthermore, if the pressure value supplied by said pressure switch 61 is greater than a further predetermined pressure value, said logic control unit 60 determines an overspeed condition for said turbines T1, T2 and simultaneously activates said actuators 40, 50 of said diverting groups 4, 5, so that said diverting members 41, 51 are both in said second operating position.

### Advantages

A first advantage of the device for generating electricity from wave motion according to the present invention is that of obtaining a synergistic effect between the following mechanisms and/or drives: drive mechanism of one or more air turbines, immediate response times and synchronized to the bidirectional air flow coming from a chamber of an oscillating water column system with an attached device protection system from high waves.

Another advantage of the device for generating electrical energy from wave motion according to the present invention is that of using two highly efficient unidirectional turbines, thus guaranteeing highly efficient energy production.

Said unidirectional turbines T1 and T2 can be positioned in cascade in multiple form, along the relevant ducts 2 and 3, always keyed on the same transmission shaft S, so as to obtain a greater torque with consequent greater production of electric energy. This result can be obtained due to the particular "Y" shape with parallel ducts object of the present invention.

A further advantage of the device for generating electricity from wave motion according to the present invention is that it can be used in all sites where sea waves reach heights of less than approximately 3 meters. The assertion is confirmed by the elementary and evident synergy of all the systems, highlighted in the attached claims, which characterize the device D, the final effect of which is given by the fact that even in the presence of a minimal wave motion detected inside chamber C, the same is immediately converted into electricity.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Device (D) for generating electrical energy from wave motion, wherein said device (D) can be coupled, in use, to a chamber (C) of an oscillating water column plant, said chamber (C) being open below to allow the entry or exit of water, wherein said device (D) comprises
a first duct (1), connected to said chamber (C),
a second duct (2), connected to said first duct (1),
a third duct (3), connected to said first duct (1) and to said second duct (2),
a first turbine (T1), installed in said second duct (2),
a second turbine (T2), installed in said third duct (3),
a first diverting group (4), arranged in said third duct (3), for diverting a first air flow (F1) coming from said chamber (C) towards the external environment, by means of said second duct (2), activating said first turbine (T1), and for diverting a second air flow (F2) coming from the external environment, by means of said third duct (3), activating said second turbine (T2),
said device (D) being **characterized in that** it further comprises
a transmitting shaft (S), arranged between said second duct (2) and said third duct (3), wherein said first turbine (T1) and said second turbine (T2) are keyed on said transmitting shaft (S), and
a rotating electrical machine (M), keyed on said transmitting shaft (S), for converting the mechanical energy supplied by said first turbine (T1) and said second turbine (T2) into electrical energy in the form of alternating current.

2. Device (D) according to the preceding claim, **characterized in that** it comprises a central control unit (6) comprising a logic control unit (60), connected to said first diverting group (4), wherein said first diverting group (4) comprises a first actuator (40) and a first diverting member (41) connected to said first actuator (40),
a pressure switch (61),
a piezometric tube (63) connected to said pressure switch (61),
wherein said pressure switch (61), connected to said logic control unit (60) and to said chamber (C) by means said piezometric tube (63), is capable of detecting at least one pressure value associated to an amount of water contained in said piezometric tube (63), such that:
- if said pressure value detected by said pressure switch (61) is positive, said logic control unit (60) determines the presence of an increasing wave and activates said actuator (40) in such a way that said first diverting member (41) moves from a second operating position, in which it allows to said second air flow (F2) to flow in said first duct (1), to a first operating position, in which it allows to said first flow air (F1) to allow in said second duct (2); or
- if said pressure value detected by said pressure switch (61) is negative, said logic control unit (60) determines the presence of a decreasing wave and activates said actuator (40) in such a way that said first diverting member (41) moves from said first operating position to said second operating position.

3. Device (D) according to claim 2,
**characterized**
**in that** said central control unit (6) comprises a proximity sensor (62), connected to said logic control unit (60) and to said chamber (C) by means of said piezometric tube (63), wherein said proximity sensor (62) is capable of detecting the presence of water contained in said piezometric tube (63) within a predetermined distance from said proximity sensor (62),
**in that** said third duct (30) has a further opening (31) \for allowing the passage of a third air flow and/or water (F3) from said chamber (C) towards the external environment, and
**in that** it comprises a second diverting group (5), arranged in said third duct (3) and connected to said logic control unit (60),
wherein said second diverting group (5) comprises
a second actuator (50), and
a second diverting member (51), connected to said second actuator (50).

4. Device (D) according to the preceding claim, **characterized in that**, when said proximity sensor (62) detects the presence of water within said predetermined distance or when said pressure value provided by said pressure switch (61) is greater than a further pressure value, said logic control unit (60) is configured for activating at the same time said actuators (40, 50) of said diverting groups (4, 5) in such a way said diverting member (41, 51) are both in said second operating position, so that said flow of water and/or air (F3) does not flow towards said turbines (T1, T2).

5. Device (D) according to any one of the preceding claim, **characterized**
**in that** said first turbine (T1) is a unidirectional air turbine and comprises a plurality of first rotating members (A1) having a first orientation,
**in that** said second turbine (T2) is a unidirectional air turbine and comprises a plurality of second rotating members (A2) having a second orientation,
wherein said second orientation of said second rotating members (A2) is opposite to said first orientation of said first rotating members (A1).

6. Device (D) according to claim 5,
**characterized**
**in that** said first rotating members (A1) and said second rotating members (A2) are made of brass to resist the corrosive action of wave motion, and
**in that** said first (1), second (2) and third (3) duct are made of AISI 316 stainless steel.

7. Device (D) according to any one of the preceding claims, **characterized in that** said electrical rotating machine (M) is connected to a converter (7), connected in its turn to an electrical power supply network (8), wherein said converter (7) is capable of converting in the form of variable frequency alternating current supplied by said rotating electrical machine (M) into constant frequency electrical energy in order to be placed into said electrical power supply network (8).

8. Device (D) according to anyone of the preceding claims, **characterized in that** said first duct (1), and said second duct (2) and said third duct (3) are connected to each other in such a way as to make a "Y" shaped structure, wherein said second duct (2) and said third duct (3) are parallel to each other.

9. Device (D) according to any one of the preceding claims, **characterized**
**in that** said first duct (1) has an opening (10) on one end for allowing air and/or water to flow from said chamber (C) towards said second duct (2) or said second duct (3) and vice versa, and
**in that** said second duct (2) has an opening (20) on one end for allowing the exit of said first air flow (F1) from said chamber (C) towards the external environment.

## Patentansprüche

1. Vorrichtung (D) zur Erzeugung elektrischer Energie aus Wellenbewegung, wobei die Vorrichtung (D) im Gebrauch mit einer Kammer (C) einer oszillierenden Wassersäulenanlage gekoppelt werden kann, wobei die Kammer (C) unten offen ist, um den Eintritt oder Austritt von Wasser zu ermöglichen, wobei die Vorrichtung (D) Folgendes umfasst
eine erste Leitung (1), die mit der genannten Kammer (C) verbunden ist,
ein zweiter Kanal (2), der mit dem ersten Kanal (1) verbunden ist,
ein dritter Kanal (3), der mit dem ersten Kanal (1) und dem zweiten Kanal (2) verbunden ist,
eine erste Turbine (T1), die in dem zweiten Kanal (2) installiert ist,
eine zweite Turbine (T2), die in dem dritten Kanal (3) installiert ist,
eine erste Umleitungsgruppe (4), die in dem dritten Kanal (3) angeordnet ist, um einen ersten Luftstrom (F1), der aus der Kammer (C) kommt, über den zweiten Kanal (2) in die Außenumgebung umzuleiten, wobei die erste Turbine (T1) aktiviert wird, und um einen zweiten Luftstrom (F2), der aus der Außenumgebung kommt, über den
dritten Kanal (3) umzuleiten, wodurch die zweite Turbine (T2) aktiviert wird,
wobei die Vorrichtung (D) **dadurch gekennzeichnet ist, dass** sie außerdem umfasst
eine Übertragungswelle (S), die zwischen dem zweiten Kanal (2) und dem dritten Kanal (3) angeordnet ist, wobei die erste Turbine (T1) und die zweite Turbine (T2) auf der Übertragungswelle (S) verkeilt sind, und
eine rotierende elektrische Maschine (M), die auf der Übertragungswelle (S) verkeilt ist, um die von der ersten Turbine (T1) und der zweiten Turbine (T2) gelieferte mechanische Energie in elektrische Energie in Form von Wechselstrom umzuwandeln.

2. Vorrichtung (D) nach dem vorhergehenden Anspruch, **dadurch gekennzeichnet, dass** sie eine zentrale Steuereinheit (6) umfasst, die eine logische Steuereinheit (60) umfasst, die mit der ersten Umlenkgruppe (4) verbunden ist, wobei die erste Umlenkgruppe (4) ein erstes Stellglied (40) und ein erstes Umlenkelement (41) umfasst, das mit dem ersten Stellglied (40) verbunden ist,
einen Druckschalter (61),
ein piezometrisches Rohr (63), das mit dem Druckschalter (61) verbunden ist,
wobei der Druckschalter (61), der über das piezometrische Rohr (63) mit der logischen Steuereinheit (60) und mit der Kammer (C) verbunden ist, in der Lage ist, mindestens einen Druckwert zu erfassen, der mit einer in dem piezometrischen Rohr (63) enthaltenen Wassermenge verbunden ist, so dass:
- wenn der von dem Druckschalter (61) erfasste Druckwert positiv ist, die logische Steuereinheit (60) das Vorhandensein einer ansteigenden Welle feststellt und das Stellglied (40) so aktiviert, dass sich das erste Umlenkelement (41) von einer zweiten Betriebsposition, in der es den zweiten Luftstrom (F2) in den ersten Kanal (1) strömen lässt, in eine erste Betriebsposition bewegt, in der es den ersten Luftstrom (F1) in den zweiten Kanal (2) strömen lässt; oder
- wenn der von dem Druckschalter (61) erfasste Druckwert negativ ist, wird der
die logische Steuereinheit (60) das Vorhandensein einer abnehmenden Welle feststellt und das Stellglied (40) so aktiviert, dass sich das erste Umlenkelement (41) von der ersten Betriebsposition in die zweite Betriebsposition bewegt.

3. Vorrichtung (D) gemäß Anspruch 2,
**dadurch gekennzeichnet,**
**dass** die zentrale Steuereinheit (6) einen Näherungssensor (62) umfasst, der mit der logischen Steuereinheit (60) und mit der Kammer (C) über das piezometrische Rohr (63) verbunden ist, wobei der Näherungssensor (62) in der Lage ist, das Vorhandensein von Wasser, das in dem piezometrischen Rohr (63) enthalten ist, innerhalb eines vorbestimmten Abstands von dem Näherungssensor (62) zu erfassen, dass die dritte Leitung (30) eine weitere Öffnung (31) aufweist, die den Durchgang eines dritten Luftstroms und/oder Wassers (F3) von der Kammer (C) zur äußeren Umgebung ermöglicht, und
**dass** sie eine zweite Umleitungsgruppe (5) umfasst, die in dem dritten Kanal (3) angeordnet und mit der logischen Steuereinheit (60) verbunden ist,
wobei die zweite Ablenkungsgruppe (5) Folgendes umfasst
einen zweiten Aktuator (50) und
ein zweites Umlenkelement (51), das mit dem zweiten Stellglied (50) verbunden ist.

4. Vorrichtung (D) nach dem vorhergehenden Anspruch, **dadurch gekennzeichnet, dass**, wenn der Näherungssensor (62) das Vorhandensein von Wasser innerhalb des vorbestimmten Abstands detektiert oder wenn der von dem Druckschalter (61) gelieferte Druckwert größer als ein weiterer Druckwert ist, die logische Steuereinheit (60) so konfiguriert ist, dass sie gleichzeitig die Aktuatoren (40, 50) der Umlenkgruppen (4, 5) so aktiviert, dass die Umlenkelemente (41, 51) beide in der zweiten Betriebsposition sind, so dass der Wasser- und/oder Luftstrom (F3) nicht zu den Turbinen (T1, T2) fließt.

5. Vorrichtung (D) nach einem der vorhergehenden Ansprüche, **dadurch gekennzeichnet, dass** die erste Turbine (T1) eine unidirektionale Luftturbine ist und eine Vielzahl von ersten rotierenden Elementen (A1) mit einer ersten Ausrichtung umfasst,
dass die zweite Turbine (T2) eine unidirektionale Luftturbine ist und eine Vielzahl von zweiten rotierenden Elementen (A2) mit einer zweiten Ausrichtung umfasst,
wobei die zweite Ausrichtung der zweiten Drehteile (A2) der ersten Ausrichtung der ersten Drehteile (A1) entgegengesetzt ist.

6. Vorrichtung (D) nach Anspruch 5,
**dadurch gekennzeichnet,**
**dass** die ersten rotierenden Elemente (A1) und die zweiten rotierenden Elemente (A2) aus Messing hergestellt sind, um der korrosiven Wirkung der Wellenbewegung zu widerstehen, und
**dass** die erste (1), zweite (2) und dritte (3) Leitung aus rostfreiem Stahl AISI 316 hergestellt sind.

7. Vorrichtung (D) nach einem der vorhergehenden Ansprüche, **dadurch gekennzeichnet, dass** die rotierende elektrische Maschine (M) mit einem Konverter (7) verbunden ist, der seinerseits mit einem elektrischen Stromversorgungsnetz (8) verbunden ist, wobei der Konverter (7) in der Lage ist, in Form von Wechselstrom mit variabler Frequenz, der von der rotierenden elektrischen Maschine (M) geliefert wird, in elektrische Energie mit konstanter Frequenz umzuwandeln, um sie in das elektrische Stromversorgungsnetz (8) einzugeben.

8. Vorrichtung (D) nach einem der vorhergehenden Ansprüche, **dadurch gekennzeichnet, dass** die erste Leitung (1), die zweite Leitung (2) und die dritte Leitung (3) so miteinander verbunden sind, dass sie eine "Y"-förmige Struktur bilden, wobei die zweite Leitung (2) und die dritte Leitung (3) parallel zueinander sind.

9. Vorrichtung (D) nach einem der vorstehenden Ansprüche,
**dadurch gekennzeichnet,**
**dass** die erste Leitung (1) an einem Ende eine Öffnung (10) aufweist, um Luft und/oder Wasser von der Kammer (C) zu der zweiten Leitung (2) oder der zweiten Leitung (3) und umgekehrt strömen zu lassen, und
**dass** die zweite Leitung (2) an einem Ende eine Öffnung (20) aufweist, die den Austritt des ersten Luftstroms (F1) aus der Kammer (C) in Richtung der äußeren Umgebung ermöglicht.

## Revendications

1. Dispositif (D) de production d'énergie électrique à partir d'un mouvement ondulatoire, dans lequel ledit dispositif (D) peut être couplé, en cours d'utilisation, à une chambre (C) d'une installation à colonne d'eau oscillante, ladite chambre (C) étant ouverte en dessous pour permettre l'entrée ou la sortie de l'eau, dans lequel ledit dispositif (D) comprend un premier conduit (1), relié à ladite chambre (C), un deuxième conduit (2), relié audit premier conduit (1),
un troisième conduit (3), relié audit premier conduit (1) et audit deuxième conduit (2),
une première turbine (T1), installée dans le second conduit (2),
une deuxième turbine (T2), installée dans ledit troisième conduit (3),
un premier groupe de dérivation (4), disposé dans ledit troisième conduit (3), pour dériver un premier flux d'air (F1) provenant de ladite chambre (C) vers l'environnement extérieur, au moyen dudit deuxième conduit (2), activant ladite première turbine (T1), et pour dériver un deuxième flux d'air (F2) provenant de l'environnement extérieur, au moyen dudit troisième conduit (3), activant ladite deuxième turbine (T2),
ledit dispositif (D) est **caractérisé en ce qu'**il comprend en outre
un arbre de transmission (S), disposé entre ledit deuxième conduit (2) et ledit troisième conduit (3), dans lequel ladite première turbine (T1) et ladite deuxième turbine (T2) sont clavetées sur ledit arbre de transmission (S), et
une machine électrique tournante (M), calée sur ledit arbre de transmission (S), pour convertir l'énergie mécanique fournie par ladite première turbine (T1) et ladite seconde turbine (T2) en énergie électrique sous forme de courant alternatif.

2. Dispositif (D) selon la revendication précédente, **caractérisé en ce qu'**il comprend une unité de commande centrale (6) comprenant une unité de commande logique (60), connectée audit premier groupe de déviation (4), dans lequel ledit premier groupe de déviation (4) comprend un premier actionneur (40) et un premier élément de déviation (41) connecté audit premier actionneur (40),
un pressostat (61),
un tube piézométrique (63) relié audit pressostat (61),
dans lequel ledit pressostat (61), relié à ladite unité de commande logique (60) et à ladite chambre (C) au moyen dudit tube piézométrique (63), est capable de détecter au moins une valeur de pression associée à une quantité d'eau contenue dans ledit tube piézométrique (63), de telle sorte que:
- si ladite valeur de pression détectée par ledit pressostat (61) est positive, ladite unité de commande logique (60) détermine la présence d'une onde croissante et active ledit actionneur (40) de manière à ce que ledit premier élément de déviation (41) se déplace d'une seconde position de fonctionnement, dans laquelle il permet audit second flux d'air (F2) de s'écouler dans ledit premier conduit (1), à une première position de fonctionnement, dans laquelle il permet audit premier flux d'air (F1) de s'écouler dans ledit second conduit (2); ou
- si ladite valeur de pression détectée par ledit pressostat (61) est négative, ledit
l'unité de commande logique (60) détermine la présence d'une onde décroissante et active ledit actionneur (40) de manière à ce que ledit premier élément de déviation (41) passe de ladite première position de fonctionnement à ladite seconde position de fonctionnement.

3. Dispositif (D) selon la revendication 2,
**caractérisé**
**en ce que** ladite unité centrale de commande (6) comprend un capteur de proximité (62), connecté à ladite unité de commande logique (60) et à ladite chambre (C) au moyen dudit tube piézométrique (63), dans lequel ledit capteur de proximité (62) est capable de détecter la présence d'eau contenue dans ledit tube piézométrique (63) à une distance prédéterminée dudit capteur de proximité (62),
**en ce que** ledit troisième conduit (30) présente une autre ouverture (31) permettant le passage d'un troisième flux d'air et/ou d'eau (F3) de ladite chambre (C) vers l'environnement extérieur, et
**en ce qu'**il comprend un deuxième groupe de déviation (5), disposé dans ledit troisième conduit (3) et connecté à ladite unité de commande logique (60),
dans lequel ledit deuxième groupe de déviation (5) comprend
un deuxième actionneur (50), et
un deuxième élément de déviation (51), relié à ce deuxième actionneur (50).

4. Dispositif (D) selon la revendication précédente, **caractérisé en ce que**, lorsque ledit capteur de proximité (62) détecte la présence d'eau dans ladite distance prédéterminée ou lorsque ladite valeur de pression fournie par ledit pressostat (61) est supérieure à une valeur de pression supplémentaire, ladite unité de commande logique (60) est configurée pour activer en même temps lesdits actionneurs (40, 50) desdits groupes de déviation (4, 5) de manière à ce que ledit élément de déviation (41, 51) se trouve tous deux dans ladite deuxième position de fonctionnement, de sorte que ledit flux d'eau et/ou d'air (F3) ne s'écoule pas vers lesdites turbines (T1, T2).

5. Dispositif (D) selon l'une quelconque des revendications précédentes, **caractérisé en ce que** ladite première turbine (T1) est une turbine à air unidirectionnelle et comprend une pluralité de premiers éléments rotatifs (A1) ayant une première orientation,
**en ce que** ladite seconde turbine (T2) est une turbine à air unidirectionnelle et comprend une pluralité de seconds éléments rotatifs (A2) ayant une seconde orientation,
dans lequel la seconde orientation des seconds éléments rotatifs (A2) est opposée à la première orientation des premiers éléments rotatifs (A1).

6. Dispositif (D) selon la revendication 5,
**caractérisé**
**en ce que** lesdits premiers éléments rotatifs (A1) et lesdits seconds éléments rotatifs (A2) sont en laiton pour résister à l'action corrosive du mouvement des vagues, et
le premier (1), le deuxième (2) et le troisième (3) conduits sont en acier inoxydable AISI 316.

7. Dispositif (D) selon l'une quelconque des revendications précédentes, **caractérisé en ce que** ladite machine électrique tournante (M) est connectée à un convertisseur (7), connecté à son tour à un réseau d'alimentation électrique (8), dans lequel ledit convertisseur (7) est capable de convertir sous forme de courant alternatif à fréquence variable fourni par ladite machine électrique tournante (M) en énergie électrique à fréquence constante afin d'être placé dans ledit réseau d'alimentation électrique (8).

8. Dispositif (D) selon l'une quelconque des revendications précédentes, **caractérisé en ce que** le premier conduit (1), le deuxième conduit (2) et le troisième conduit (3) sont reliés l'un à l'autre de manière à former une structure en forme de "Y", dans laquelle le deuxième conduit (2) et le troisième conduit (3) sont parallèles l'un à l'autre.

9. Dispositif (D) selon l'une quelconque des revendications précédentes,
**caractérisé**
**en ce que** ledit premier conduit (1) présente une ouverture (10) à une extrémité pour permettre à l'air et/ou à l'eau de s'écouler de ladite chambre (C) vers ledit second conduit (2) ou ledit second conduit (3) et vice versa, et
**en ce que** ledit second conduit (2) présente une ouverture (20) à une extrémité pour permettre la sortie dudit premier flux d'air (F1) de ladite chambre (C) vers l'environnement extérieur.
